# EUROPEAN PATENT APPLICATION

(11) **EP 0 892 449 A1**
(43) Date of publication of application: **20.01.1999**
(21) Application number: 98303898.5
(22) Date of filing: 18.05.1998
(51) Int. Cl.: H01M 2/16, H01M 10/34

(54) **Battery cell with porous spray-formed separator**

(30) Priority: 19.05.1997 US 858301
(71) Applicant: Hughes Electronics Corporation, El Segundo, California 90245-0956 (US)
(72) Inventor: BOGNER, Richard S., Altadena, California 91001 (US)
(74) Representative: Jackson, Richard Eric

(57) **Abstract**

An electrochemical battery cell has at least one plate set, each plate set including an anode, a cathode, and a separator between the anode and the cathode. The separator is formed by spraying a porous layer of a ceramic separator material, such as zirconium oxide, onto the anode, the cathode, or both. Spraying of the porous ceramic separator layer is preferably accomplished by plasma spraying. The porous separator layer is thereafter saturated with an electrolyte. For most practical applications, a number of the plate sets are placed into a sealed housing with external leads.

## Description

### BACKGROUND OF THE INVENTION

This invention relates to electrochemical storage cells, and, more particularly, to such cells having a separator between the anode and the cathode.

Rechargeable cells or batteries are electrochemical energy storage devices for storing and retaining an electrical charge and later delivering that charge as useful power. Familiar examples of the rechargeable battery cell are the lead-acid cell used in automobiles and the nickel-cadmium (NiCd) cell used in various portable electronic devices. Another type of battery cell having a greater storage capacity for its weight is the nickel oxide/pressurized hydrogen cell, an important type of which is commonly called the nickel-hydrogen cell and is used in spacecraft applications.

The nickel-hydrogen cell includes a series of active plate sets which store an electrical charge electrochemically and later deliver that charge as a useful current. The active plate sets are packaged within a hermetic pressure vessel that contains the plate sets and the hydrogen gas that is an essential active component of the celL Each plate set includes a cathode (negative electrode), an anode (positive electrode, and a porous separator between the two electrodes, all soaked with an electrolyte. In a typical cell, a number of plate sets are supported on a core under a compressive loading, with a gas screen between each plate set and with electrical connector leads extending to each electrode of each plate set. The gas screen provides a gas channel from the hydrogen electrode to the gas space outside the stack. A single nickel-hydrogen storage cell delivers current at about 1.3 volts, and a number of the cells are usually connected in series to produce current at the voltage required by the systems of the spacecraft.

This battery cell works well in a number of spacecraft applications. However, there is always a desire to reduce the cost of fabrication and weight of the battery cells, as well as to improve their performance. The present provides such an approach that is applicable to the nickel-hydrogen cell used as an example here. and to other types of electrochemical battery cells that utilize a porous separator.

### SUMMARY OF THE INVENTION

The present invention provides a plate set for an electrochemical battery cell. The plate set and battery cell are fully functional with good performance, but the cost of fabrication is reduced as compared with prior approaches. The weight of the battery cell may be reduced if desired.

In accordance with the invention, a battery cell comprises at least one plate set, and preferably a number of generally planar plate sets in face-to-face relationships positioned inside a vessel, with electrical interconnects extending from the exterior of the vessel to the plate sets. Each plate set includes an anode, a cathode, and a separator intermediate the anode and the cathode and adhered to at least one of the anode and the cathode. The separator has a porous sprayed structure. An electrolyte is impregnated into the separator, and usually into the anode and cathode, in an active plate set.

A method for preparing such a battery cell includes the steps of providing an anode, providing a cathode, applying a porous separator material onto and adherent to at least one of the anode and the cathode, and assembling the anode and the cathode with the porous separator material therebetween. The separator material is preferably applied by a spraying technique such as plasma spraying of a ceramic material, which produces a porous structure into which the electrolyte is impregnated.

The present approach is applicable to a wide variety of battery cell types that utilize a porous separator, including, for example, nickel-hydrogen, nickel-metal hydride, and sulfur-nickel-chloride cells. The approach to forming the separator is substantially the same in each case, although the materials of construction and electrochemical reactions are different.

In the conventional approach to battery cell fabrication, the separator is a thin woven or unwoven mat of the separator material, which is usually about 0.007 ± 0.001 inch thick. The thin separator mat is produced in a relatively costly operation from fibers or powders of the constituent separator material. It is assembled with the anode, the cathode, and the other components of the battery cell. The thin separator mat is easily torn or otherwise rendered inoperable, so that a portion of the separator mats are discarded during assembly. In the present approach, by contrast, the separator is formed as a single deposited layer on either the anode or the cathode, or as two deposited sublayers, one on the anode and one on the cathode. The deposited separator layer is less costly to produce and is not subject to the same types of damage as is a conventional separator mat. If desired, the separator may be made thinner than possible with conventionally prepared separators, resulting in reduced weight and lower internal electrical resistance of the battery cell.

Other features and advantages of the present invention will be apparent from the following more detailed description of the preferred embodiment, taken in conjunction with the accompanying drawings, which illustrate, by way of example, the principles of the invention. The scope of the invention is not, however, limited to this preferred embodiment.

### BRIEF DESCRIPTION OF THE DRAWINGS

Figure 1 is a sectional view of a flight-type nickel-hydrogen cell;
Figure 2 is a detail of Figure 1, taken generally on line 2-2 and illustrating the plate sets;
Figure 3 is a block flow diagram of a preferred method for fabricating the separator and battery cell;
Figure 4 is a schematic diagram of the approach to preparing the separator integral with the anode or the cathode;
Figure 5 is a set of schematic elevational views, showing in Figure 5A the application of the separator layer to the anode only, in Figure 5B the application of the separator layer to the cathode only, and in Figure 5C the application of a separator first sublayer to the anode and the application of a separator second sublayer to the cathode; and
Figure 6 is a perspective cutaway view of a nickel-cadmium cell.

### DETAILED DESCRIPTION OF THE INVENTION

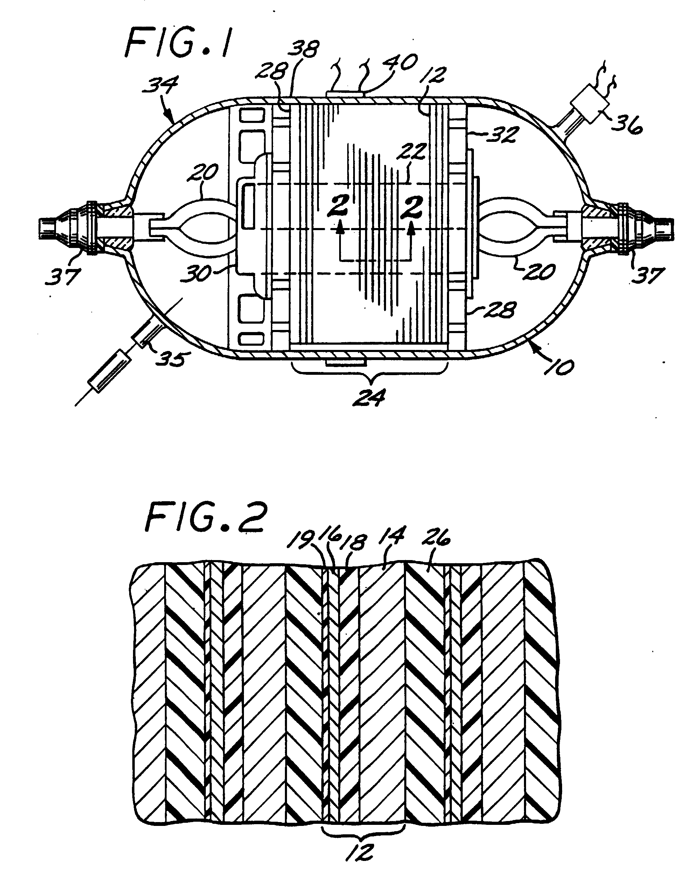

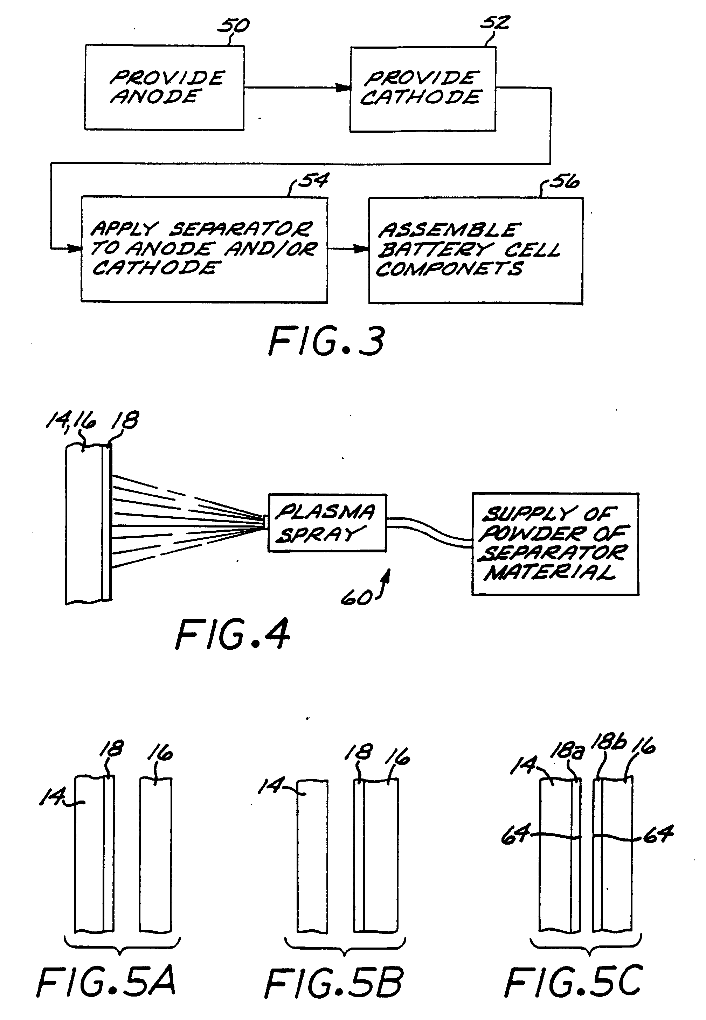

The present invention is preferably used in conjunction with a nickel-hydrogen energy storage battery cell 10, as illustrated in Figures 1-2, of the pressurized gas-metal cell type. Such a storage battery cell 10 typically comprises a plurality of individual plate sets 12. Each plate set in turn comprises an anode or positive electrode 14, a cathode or negative electrode 16, and an electrolyte-containing porous separator 18, which physically separates the electrodes 14 and 16 and also supplies the electrolyte medium through which ionic and electron charge transfer. Charging and discharging of the electrodes 14 and 16 are accomplished through respective electrical leads 20.

Various constructions of nickel-hydrogen battery cells and components are disclosed in the following US Patents, whose disclosures are herein incorporated by reference: US Patents 4,683,178; 4,369,212; 4,283,844; 4,262,061; 4,250,235; 4,000,350; and 3,669,744.

In one approach, the positive electrode 14 is formed by impregnating nickel hydroxide into porous sintered nickel that is supported on an etched nickel electrode substrate. The negative electrode 16 is porous sintered nickel or nickel mesh coated on one side by a sintered mixture of platinum black and polytetrafluoroethylene and on the other side with a porous layer 19 of polytetrafluoroethylene. These layers are applied to a nickel substrate in the form of etched sheet or a woven mesh, to form the negative electrode 16. The porous separator 18 is produced by a method to be discussed subsequently. The electrolyte, preferably an aqueous solution containing about 26-31 percent by weight concentration of potassium hydroxide, is later impregnated into the separator 18 and the electrodes 14 and 16 after assembly of the cell.

The individual plate sets 12 are assembled onto a central core 22 to form a stacked array 24. A monofilament polypropylene screen 26 is placed between each plate set 12 during assembly, so that oxygen liberated during overcharging at each positive electrode 14 can diffuse away from the positive electrode 14 and to the negative electrode 16 to combine with hydrogen. The stacked array 24 is placed under a longitudinal pressure of, for example, about 10 pounds per square inch, by tightening compression plates 28 against each end of the stacked array 24. The tightening of the compression plates 28 is preferably accomplished by compressing the array 24 and then tightening a nut 30 on threads on the core 22, thereby compressing a Belleville washer set 32 against the compression plate 28 to hold the stacked array 24 in place.

The stacked array 24 is contained within a hermetically sealed pressure vessel 34 having a wall 38 manufactured of a material such as Inconel 718 nickel-base alloy which can withstand internal pressures on the order of 1,000 psia, without damage by hydrogen embrittlement. The material of construction of the wall 38 has a relatively low diffusion coefficient of hydrogen therethrough, so that hydrogen is contained within the interior of the pressure vessel 34. A gas fill tube 35 allows gas content and pressure within the pressure vessel 34 to be controlled initially. The gas fill tube 35 is sealed after the initial charging procedures. The pressure vessel 34 is typically constructed in the form of a cylindrical tube having domed ends. By way of illustration, the battery cell 10 having the pressure vessel 34 of external dimensions of 3-1/2 to 5-1/2 inches in diameter by 13-15 inches long contains about 40-100 individual plate sets 12, with a resulting electrical storage capacity of the battery cell of about 50 to about 350 ampere-hours. The battery cell 10 may be charged and discharged through thousands of cycles without apparent damage, if the charging and discharging are accomplished properly. A number of battery cells 10 are ordinarily combined in series or parallel arrangements as a battery.

The electrical leads 20 pass from the interior of the pressure vessel 34 to its exterior through electrical feedthroughs 37. The pressure within the pressure vessel 34 may optionally be monitored by any operable technique. One such pressure-monitoring device is a pressure gauge 36 communicating with the interior of the pressure vessel, which measures interior pressure directly. Another pressure-monitoring device is a strain gage 40 mounted to the exterior of the wall 38 of the pressure vessel 34. The deformation of the wall 38, as measured by the strain gage 40, is a function of the internal pressure within the pressure vessel 34, which functional dependence is determined in initial calibration testing. The strain gage 40 approach to pressure measurement is preferred, inasmuch as the strain gage is lighter than the pressure gauge and does not require a physical penetration into the interior of the pressure vessel that would be potentially a failure point.

The separator 18 and other components of the battery cell 10 are prepared by a method illustrated in Figure 3. The anode 14 and the cathode 16 are provided, numerals 50 and 52, respectively. The anode and cathode are prepared by conventional procedures known in the art.

According to the approach of the invention, the separator 18 is prepared integrally with at least one of the anode 14 and the cathode 16 by applying the separator material directly to the anode and/or the cathode, numeral 54. As illustrated in Figure 4, in a preferred process the material of the cathode, for example zirconium oxide (which term as used herein includes yttria-stabilized zirconium oxide, or YSZ) is furnished in a powder form and sprayed onto the anode and/or the cathode target by a plasma spray apparatus 60. Plasma spraying is a well known technique for other applications, but not for the manufacture of separators to the inventor's knowledge, and plasma spray techniques and apparatus are known in the art. The output spray of the plasma spray apparatus 60 is directed against the selected target, the anode 14 and/or the cathode 16, and the layer of separator material 18 is formed in situ on the target. The layer of separator material 18 is porous when deposited in this manner and adheres to the target. The porosity is controllable through the selection of the plasma spray parameters, as is known in the art.

After the separator material 18 is deposited, the components of the battery cell 10 are assembled, numeral 56, to produce the battery cell structure as shown in Figure 1.

The present approach to preparation of the separator 18 and assembly of the battery cell may be contrasted with the conventional approach. In the conventional approach, the separator is prepared separately as a woven or unwoven mat of fibers of the separator material. The separator is therefore not formed integrally with either the anode or the cathode, or in an in-situ manner. The separator prepared by this conventional approach is typically about 0.007 inches thick. It is assembled together with the other components of the battery cell. The preparation of the separator as a separate component is more expensive than its integral preparation as described above, and there is a greater likelihood of damage to the non-integral separator during handling and assembly. Additionally, the preparation of the separator as a separate component is a highly specialized technique, requiring specialized personnel and typically use of a single supplier for the material. Application by spray techniques such as plasma spraying requires less-skilled personnel and accordingly is less dependent upon those skills. There is no need to rely on a single supplier. Moreover, the process may be automated to reduce labor costs and increase the reproducibility of the process. The thickness of the separator may be controlled precisely, thereby controlling the internal resistance of this element of the battery cell.

Figure 5 shows three configurations for the separator layer 18 that may be produced in step 54, with both the anode and cathode shown in each illustration. In Figures 5A-5C, the components are shown in a face-to-face relationship as assembled, but with slight separations therebetween to more clearly depict the location of the separator material. In Figure 5A, the separator layer 18 is deposited onto the anode 14, and no separator material is deposited onto the cathode 16. In Figure 5B, the separator layer 18 is deposited onto the cathode 16, and no separator material is deposited onto the anode 14. In Figure 5C, a separator first sublayer 18a is deposited onto the anode 14 and a separator second sublayer 18b is deposited onto the cathode 16. The two sublayers, which in total have the desired thickness of the separator layer 18, meet at a join line 64 between the anode and cathode after assembly. This latter approach ensures a close, adherent relationship of the separator material to both the anode 14 and the cathode 16. In all of these approaches, the separator layer would typically be applied to both sides of the coated electrode, if the electrode is to be positioned within the plate stack. If the electrode is to be positioned at the end of the plate stack. only the inwardly facing side is coated.

The total thickness of the separator 18, whichever of the approaches of Figures 5A-5C is used, is preferably from about 0.003 to about 0.006 inches, but these thicknesses are not critical and other thicknesses are operable. The preferred separator material is zirconium oxide (including but not limited to pure zirconium oxide and modified forms such as yttria-stabilized zirconium oxide, which typically has about 8-20 weight percent yttria). Other operable separator materials may also be prepared by this approach. The relative density of the separator layer 18 may be varied by the application parameters. Typically, however, the relative density of the separator layer 18 is from about 75 to about 85 percent, with the balance of the volume open-celled, interconnected porosity into which the liquid electrolyte is introduced when the battery cell is activated.

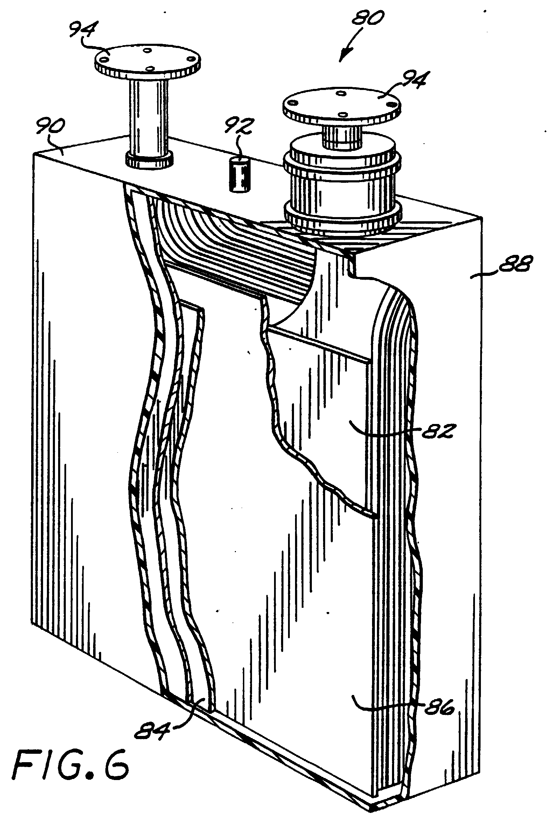

In another example, the present invention may be used with a nickel-cadmium (NiCd) cell 80 of the type illustrated in Figure 6. The cell 80 includes a nickel positive electrode 82 that is made in the same manner as described above for the nickel-hydrogen cell, and a cadmium negative electrode 84. The cadmium negative electrode 84 is made by impregnating cadmium into a porous sintered nickel plaque that is supported on an etched nickel substrate or a wire screen. Sets of the positive electrode 82 and the negative electrode 84 are stacked together with a separator 86 between the positive and negative electrodes. (In the conventional approach, the separator is a separate element that is typically made of nylon. The preparation of the separator by the present approach is as described previously.) Electrode leads are provided and welded to a header structure. The assembly is inserted into a cell case 88 made of 304L stainless steel, and a lid 90 made of the same material is welded to the case 88. A quantity of electrolyte is added through a fill tube 92, which is then sealed. External electrical contact to the cell is made through terminals 94.

The present invention was practiced using the NiCd battery cell construction, as this battery cell is simpler in construction and does not require a pressure vessel, as compared with the nickel-hydrogen cell. A nickel positive electrode and a cadmium negative electrode configured for a 21 ampere-hour NiCd battery cell were each coated on both sides with zirconium oxide by plasma spraying--that is, the approach of Figure 5C. Each electrode had active area dimensions of about 3.5 inches square. Two test plate sets were prepared from these coated electrode. The zirconium oxide-coated positive electrode was assembled between two uncoated negative electrodes, and the zirconium-oxide negative electrode was assembled between two uncoated positive electrodes. Each plate set was separately immersed in a 31 percent potassium hydroxide solution, the standard electrolyte for this battery cell type. The two plate sets were separately charged at a rate of about c/10 or 0.17 amperes until the plate sets were fully charged. After full charging, the two plate sets were discharged at a rate of about c/2 or about 0.9 amperes. The capacity of the plate set using the zirconium-oxide coated positive plate was determined to be 2.28 ampere-hours, which is equivalent to 29.64 ampere-hours on the 21 ampere-hour cell basis. The capacity of the plate set using the zirconium-oxide coated negative plate was determined to be 3.02 ampere-hours, which is equivalent to 42 ampere-hours on the 21 ampere-hour cell basis. The test procedures are those routinely used in evaluation of battery cells.

From these studies, it was concluded that the application of the separator material directly to the electrodes, to produce an integral or in-situ separator, is operable to yield excellent battery cell performance.

Although a particular embodiment of the invention has been described in detail for purposes of illustration, various modifications and enhancements may be made without departing from the spirit and scope of the invention. Accordingly, the invention is not to be limited except as by the appended claims.

## Claims

1. A battery cell comprising at least one plate set, each plate set including:
an anode;
a cathode; and
a separator intermediate the anode and the cathode and adhered to at least one of the anode and the cathode, the separator having a porous sprayed structure.

2. The battery cell of claim 1, wherein the anode is made of porous nickel impregnated with nickel hydroxide.

3. The battery cell of claim 1, wherein the cathode is made of porous nickel having a later of platinum black thereon.

4. The battery cell of claim 1, wherein the cathode is made of cadmium impregnated into a porous sintered nickel plaque.

5. The battery cell of claim 1, wherein the separator comprises a ceramic.

6. The battery cell of claim 1, wherein the separator comprises porous zirconium oxide.

7. The battery cell of claim 1, wherein the separator comprises two separator sublayers, a first sublayer adhered to the anode and a second sublayer adhered to the cathode.

8. The battery cell of claim 1, further including
an electrolyte impregnated into the separator.

9. The battery cell of claim 1, wherein the battery cell comprises a plurality of plate sets positioned in face-to-face relationships.

10. A method of preparing a battery cell comprising a plate set, the method including the steps of:
providing an anode;
providing a cathode;
applying a porous separator material onto and adherent to at least one of the anode and the cathode; and
assembling the anode and the cathode with the porous separator material therebetween.
